Europäisches Patentamt

European Patent Office

Office européen des brevets

(11) Veröffentlichungsnummer: **0 329 825 B1**

(12) **EUROPÄISCHE PATENTSCHRIFT**

(45) Veröffentlichungstag der Patentschrift: **03.06.92**

(51) Int. Cl.5: **E02D 31/00**, B09B 1/00

(21) Anmeldenummer: **88114843.1**

(22) Anmeldetag: **10.09.88**

(54) **Reparierfähige Deponieabdichtung.**

(30) Priorität: **26.02.88 DE 3806141**

(43) Veröffentlichungstag der Anmeldung:
**30.08.89 Patentblatt 89/35**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI NL SE**

(56) Entgegenhaltungen:
**EP-A- 0 185 268**
**DE-A- 3 407 382**
**DE-A- 3 539 193**
**DE-A- 3 545 207**
**DE-A- 3 604 600**

(73) Patentinhaber: **HÜLS TROISDORF AKTIENGE-
SELLSCHAFT**
**Postfach 11 65**
**W-5210 Troisdorf(DE)**

(72) Erfinder: **Schlütter, Aloys**
**Rheinstrasse 42**
**W-4152 Kempen 3(DE)**
Erfinder: **Kaewert, Klaus**
**Gänsestrasse 4**
**W-4000 Düsseldorf 13(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Deponieabdichtung nach dem Oberbegriff des Anspruchs 1. Eine derartige Deponieabdichtung ist in der DE-A-3 604 600 beschrieben.

Die Umweltbelastung durch Sickerwässer erfordert bei Deponien eine Deponieabdichtung. Dabei wird unterschieden zwischen nachträglicher Abdichtung vorhandener Deponien und dem Abdichten beim Neuanlegen von Deponien. Beim Neuanlegen von Deponien haben sich Kunststoffabdichtungsbahnen durchgesetzt. Die Kunststoffabdichtungsbahnen werden auf der vorher vorbereiteten Deponiesohle ausgelegt und miteinander verschweißt. Der Schweißvorgang wird dadurch vereinfacht, dar die Abdichtungsbahnnen in Form möglichst großer Planen an der Baustelle angeliefert werden. Die Abdichtungsbahnen werden in ihrer ursprünglichen Form oder in der Form von Planen dann so verlegt, daß sie sich an den Rändern überlappen und dort verschweißt werden können.

Die Abdichtungsbahnen werden allerdings auf einem vorbereiteten Untergrund verlegt. Zur Vorbereitung des Untergrundes gehört eine Feinplanum und ggf. eine mineralische Dichtschicht, z.B. Lehm oder Ton.

Auf der Kunststoffabdichtung ist in der Regel eine Schutzschicht vorgesehen, darüber eine Drainageschicht bzw. ein Drainagesystem. Die Schutzschicht besteht wahlweise aus Kunststoff-Faservliesen und/oder mineralischen Überdeckungen.

Frühere Deponien wurden in der Regel nur einlagig hergestellt. Zwischenzeitlich ist eine zweilagige Herstellung Stand der Technik. Es ist bekannt, zwischen beiden Lagen eine Drainschicht anzuordnen. Die Drainschicht dient der Leckanzeige und im Falle einer Leckströmung dem Verpressen von Abdichtungsmitteln.

Um den Verbrauch von Abdichtungsmitteln im Falle einer Leckage zu verringern, ist es bekannt, die Deponieabdichtung in Felder zu unterteilen. Diese Unterteilung bringt in Ausführung bekannter Lösungen erhebliche Probleme. Zu diesen Problemen gehören Schweißprobleme. U. a. besteht Gefahr, daß im Grenzbereich der Kissen die zwischenliegende Drainschicht verlorengeht.

Ferner steht in Frage, wie nach einer Leckage die Kissen zum Injizieren von Kunstharz zugänglich sind. Es bedarf erheblicher Leitungslängen, um von außen durch den Deponiekörper das Injektionsmittel in die Kissen zu bringen. Dabei ist auch zu klären, ob der zu erwartende Leitungswiderstand gegen das Verpressen nicht so hoch ist, daß komplizierte Leitungen, insbesondere Hochdruckleitungen und Hochdruckpumpen erforderlich werden.

Außerdem ist das Volumen der Kissen auch bei ganz dünner Drainschicht groß, so daß bei jeder Leckanzeige kubikmeterweise Kunstharz in ein Kissen verpreßt werden muß.

Aufgrund der baulichen Gegebenheiten der Kissen - die geringe mechanische Belastbarkeit der Kunststoffabdichtungsbahnen - kann innerhalb der Kissen nur mit relativ bescheidenem Druck Kunstharz eingepreßt werden. Bei so bescheidenem Druck ist offen, ob der Kunstharz jeden Winkel bzw. jeden Hohlraum in der Drainschicht erreicht.

Aufgrund der mit dem Leckwasser eindringenden Feststoffpartikel besteht eine ausgesprochene Gefahr, daß die Feststoffpartikel in der Drainschicht im Bereich der Leckstelle soviel Porenvolumen ganz oder teilweise geschlossen haben, daß die Leckstelle mit einiger Sicherheit überhaupt nicht erreicht wird.

Schließlich ist zu berücksichtigen, daß nach einmaliger Leckanzeige und Verpressen einer doppelwandigen Kunststoffabdichtung eine weitere Leckanzeige und ein weiteres Verpressen nicht mehr möglich ist.

Der Erfindung liegt die Aufgabe zugrunde, sowohl den Verbrauch an Dichtmittel zu verringern, als auch eine wirksame Abdichtung herbeizuführen. Dabei greift die Erfindung den an sich nachteiligeren Lösungsvorschlag der Deponieabdichtung mit mineralischer Drainschicht wieder auf. Nach der Erfindung ist für einen bergmännischen Reparaturabbau eine Drainschicht mit einer Dicke von mindestens 80 cm vorgesehen und soll die Drainschicht in Kanäle münden, die begehbar sind und begehbare seitliche Austrittsöffnungen aufweisen bzw. für den Reparaturabbau seitlich geöffnet werden können. Eine solche Deponieabdichtung erlaubt ein anderes Abdichtungsverfahren. Ausgehend von den begehbaren Kanälen können im Falle einer Leckströmung der Leckströmung folgend Stollen in die Drainschicht bis an die Leckstelle vorgetrieben werden. Dort wird nach der Erfindung ein Verfestigungsmittel durch die Leckstelle hindurch in die außenliegende Mineralschicht und/oder Schutzschicht und/oder Müllschicht injiziert, wenn die Leckstelle sich in der oberen Kunststofflage der Deponieabdichtung befindet. Das Verfestigungsmittel erzeugt ein die Leckstelle überspannendes Gewölbe. Ein solches Gewölbe ist entbehrlich, wenn sich die Leckstelle in der söhligen Kunststofflage befindet. Nach solcher Vorbereitung kann die Leckstelle freigelegt werden und ein Flicken auf die Leckstelle verschweißt werden.

Die vorgesehene Mindestdicke der mineralischen Drainschicht erlaubt einen Tunnelvortrieb, der auch von Hand ausgeführt und ausreichend belüftet werden kann bzw. für einen Materialtransport und/oder das Abfördern des beim Tunnelvortrieb gewonnenen Kieses oder Sandes noch ausreichenden Querschnitt aufweist.

Für den Tunnelvortrieb kommen verschiedene Alternativen in Betracht. Z.B. sind ein Schildvortrieb oder ein Rohrvortrieb geeignet. Von besonderem Vorteil ist das Injizieren eines Verfestigungsmittels. Nach der Erfindung wird das Verfestigungsmittel unter Ausbildung eines Gewölbes injiziert. Das Gewölbe kann je nach Dosierung und Ausbildung des Verfestigungsmittels selbsttragend sein. Dann bedarf es keiner weiteren Ausbaumaßnahmen für den Tunnelvortrieb und kann der vom Gewölbe umschlossene lose Kies bzw. Sand leicht hereingewonnen werden.

An einer so durchgeführten Deponieabdichtung können auftretende Leckstellen 100 %ig gesichert bzw. verschlossen werden.

Die erfindungsgemäße Ausbildung der Deponieabdichtung eröffnet noch weitere Vorteile, indem die söhlige Kunststoffabdichtungsbahn durchgehend unter den Kanälen und/oder durch die Kanäle verlegt werden kann. Dann entsteht eine geschlossene Bahn ohne Anschlußstellen, an denen sonst besondere Leckgefahr besteht. Um die durch die Auflast der Kanäle gegebene Belastung der söhligen Kunststoffabdichtungsbahn zu minimieren, ist im Bereich der Kanäle mindestens eine Fundamentplatte vorgesehen, die die Kanäle trägt. Ferner ist vorgesehen, daß die Berührungsfläche bzw. Aufstandsfläche der Kanäle auf der söhligen Kunststoffabdichtungsbahn der zulässigen Flächenbelastung der Kunststoffabdichtungsbahn angepaßt ist. Bei weichen Kunststoffabdichtungsbahnen wird der geringeren zulässigen Flächenlast dadurch Rechnung getragen, daß den Kanälen eine große Aufstandsfläche gegeben wird. Das kann z. B. in Form eines nach innen ragenden Fußes oder Kragens erfolgen.

Die Fundamentplatte hat nach der Erfindung wahlweise eine weitere Funktion. Sie bildet eine Rinne, die von der Kunststoffabdichtungsbahn überdeckt wird wobei die söhlige Kunststoffabdichtungsbahn sich in die Rinne einlegt.

Die obere Kunststoffabdichtungsbahn wird nach der Erfindung vorzugsweise durchgehend über die Kanäle verlegt. Das geschieht unter Berührung mit den Kanälen. Eine Abdichtung zwischen der oberen Abdichtungsbahn und der Kanaloberseite ist in der Regel nicht erforderlich.

Der Zwischenraum, der zwischen den Kanälen besteht, kann wahlweise noch durch schottbildende weitere Abdichtungsbahnen in kleinere Felder aufgeteilt werden. Diese Bahnen sind jeweils mit der oberen und unteren Abdichtungsbahn verschweißt, ein dichter Anschluß der schottbildenden Zwischenbahnen an die Kanäle ist in der Regel nicht erforderlich. Nach der Erfindung kann Leckwasser im Bereich der Kanäle beliebig in die Kanäle eintreten. Das erleichtert die Leckanzeige und den der Leckströmung folgenden Stollenvortrieb.

Die schottbildenden Zwischenbahnen können nach Fertigstellung der gesamten söhligen Kunststoffabdichtungsbahn oder wahlweise auch je nach Arbeitsfortschritt der söhligen Kunststoffabdichtungsbahn mit dieser verschweißt werden. Für die Verschweißung der schottbildenden Zwischenbahn mit der oberen Kunststoffabdichtung ist vorzugsweise eine Verschweißung je nach Arbeitsfortschritt der oberen Kunststoffabdichtung vorgesehen, wobei die Schweißnaht im Bereich einer Naht in der oberen Kunststoffabdichtung verlaufen soll. Dadurch ist nur ein geringer und gut handhabbarer Planenrand gegeben, der leicht mit der schottbildenden Zwischenwand verschweißt werden kann. Ein Weg ist eine überlappende Verschweißung zwischen dem noch freien Rand des bis dahin fertiggestellten Abschnittes der oberen Kunststoffabdichtung. An den so mit der schottbildenden Zwischenwand verschweißten Rand kann die nächste Plane bzw. Bahn der oberen Kunststoffabdichtung problemlos angeschweißt werden. Für derartige Schweißvorgänge eignen sich Schweißgeräte, die nach Plastifizierung der Schweißflächen mit ihrer Auflast den erforderlichen Schweißdruck aufbringen.

Die Kanäle für die erfindungsmäßige Deponieabdichtung bestehen z. B. aus Beton, insbesondere armiertem Beton. Auch Kunststoffkanäle können in Betracht kommen. Vorteilhaft ist ein n-förmiger Kanalquerschnitt. Bei solchem Kanalquerschnitt besitzt der Kanal an der Berührungsfläche mit der söhligen Kunststoffabdichtung unten eine Öffnung. Das erlaubt eine freie Strömung der Leckflüssigkeit in Kanallängsrichtung. Die n-förmigen Kanäle besitzen am Fuß Drainöffnungen. Es handelt sich vorzugsweise um eingeformte Öffnungen halbkreisförmigen Querschnitts.

In Weiterentwicklung des Konzeptes ist die Zwischenlage zwischen den beiden Kunststoffabdichtungen so dick zu wählen, daß im Falle einer Leckanzeige der Leckströmung unter bergmännischem Abbau der Zwischenlage bis zur Leckstelle gefolgt werden kann, um dort die Leckstelle in der oberen Abdichtung zu verschließen. Dabei geht die Erfindung von der Überlegung aus, die begehbaren Rohre/Kanäle unterhalb der Basisabdichtung der Deponie zugleich als Sammlerrohre zu benutzen, um die Revisionsschächte und Sammlerschächte aus dem Deponiekörper heraus seitlich am Deponiekörper vorbeizuführen. Nach der Erfindung wird das dadurch erreicht, daß die unter der Basisabdichtung vorgesehenen begehbaren Rohre eine Sickerwasserzuführung aus dem oberhalb der Basisabdichtung liegenden Drainagesystem besitzen oder teilweise durch die Basisabdichtung der Deponie hindurchragen und so mit dem über der Basisabdichtung vorgesehenen Drainagesystem in Verbindung stehen. Nach der Erfindung nehmen die begehbaren Rohre sowohl das Sickerwasser auf, das oberhalb der Basisabdichtung der Deponie anfällt, als auch das Leckwasser, das bei Leckstellen unterhalb der Basisabdichtung anfällt. Das Leckwasser tritt, wenn die Rohre auf der zweiten Abdichtungslage stehen und am Fuß mit entsprechenden Eintrittsöffnungen versehen sind, leicht durch die Eintrittsöffnungen in die Rohre ein. Dies kann auch in anderer Weise gestaltet werden, wobei Lösungen Anwendung finden können, die oberhalb der Basisabdichtung zur Entsorgung des anfallenden Sickerwassers bekannt sind.

Es ist von großem Vorteil, wenn die Sammler- und Revisionsschächte einer Deponie außerhalb des Deponiekörpers liegen. Dann sind diese Schächte nicht mehr den Setzbewegungen des Deponiekörpers ausgesetzt. Vor diesem Hintergrund kann es selbständige Bedeutung haben, die vorstehende Konstruktion auch ohne eine zweite, untere Kunststoffabdichtung anzuwenden.

Das oberhalb der Basisabdichtung anfallende Sickerwasser, welches nach der Erfindung in die begehbaren und zugleich als Sammlerrohre dienenden Rohre geleitet wird, wird separat vom Leckwasser geführt. Das wird vorzugsweise dadurch erreicht, daß das Sickerwasser in einer mittigen Rinne in den Rohren geführt wird, während das Leckwasser in seitlichen Rinnen gesammelt und abgeführt wird. In den seitlichen Rinnen läßt sich auftretendes Leckwasser leicht kontrollieren.

In die mittige Rinne wird das Sickerwasser in der einen Alternative mit unterhalb der Basisabdichtung angeordneten begehbaren Rohren dadurch geführt, daß die Sickerwasserzuführung mittig im Firstbereich der Rohre mündet. Dann kann durch Überstand der Rohrstutzen in den Innenraum der begehbaren Rohre erzwungen werden, daß das Sickerwasser in die mittige Rinne abtropft. Vorzugsweise werden die eintretenden Sickerwässer jedoch so gelenkt, daß sie an den Seitenwänden der begehbaren Rohre abfließen können.

Dabei kann zugleich eine Vermengung mit anfallendem Leckwasser dadurch vermieden werden, daß die Leckwasserrinnen mit einem herabhängenden Folienlappen überdeckt sind. Diese Lösung findet auch dann bevorzugt Anwendung, wenn die begehbaren Rohre teilweise durch die Basisabdichtung hindurchragen und für den Sickerwassereintritt im Bereich der Drainageschicht oberhalb der Basisabdichtung mit entsprechenden Eintrittsöffnungen versehen sind.

Die einzelnen Rinnen können auch gegeneinander abgedichtet sein, so daß ein Überlaufen von einer Rinne in die andere ausgeschlossen ist. Das gleiche gilt für einen Gasübertritt. Eine solche Konstruktion entsteht z.B. durch ein in Längsrichtung mehrteiliges Rohr. In einem solchen Fall ist vorgesehen, daß die nicht begehbaren Teile durch Revisionsöffnungen vom begehbaren Teil aus zugänglich sind.

Im übrigen ist es von großem Vorteil, wenn die begehbaren Rohre aus Kunststoff gefertigt sind, dann sind die Rohre insbesondere in Verwendung von Hochdruckpolyäthylen in einem Höchstmaß gegen die anfallenden Sickerwässer widerstandsfähig.

In Abweichung von dem älteren Vorschlag, die begehbaren Rohre mit Fenstern zu versehen, können die Kunststoffrohre bis auf die Eintrittsöffnungen für Leckwasser bzw. Sickerwasser geschlossen sein. Im Falle erkennbaren Leckwassereintritts läßt sich dann am Leckwassereintritt eine Öffnung in das Kunststoffrohr schneiden, die für einen bergmännischen Vortrieb in der Drainageschicht zwischen den beiden Kunststoffabdichtungen genutzt werden kann. Ggf. wird die Öffnung anschließend wieder verschlossen.

Ferner ist es von Vorteil, wenn der bergmännische Abbau der Drainageschicht mit einem Messerschild oder dergleichen erfolgt, der in ausreichendem Sicherheitsabstand von der oberen und unteren Kunststoffabdichtungslage vorgetrieben wird und nach einem Vortrieb zugleich einen Schildausbau für einen anschließenden vorsichtigen Abbau bis auf die untere Kunststoffabdichtungslage bildet. Dann kann in diesem Bereich das Bodenteil eines Ausbaus auf der Kunststoffabdichtung verlegt werden, das bei einer nachfolgenden Vorwärtsbewegung des Messerschildes für diesen eine Unterlage bzw. Gleitschicht und für die darunterliegende Kunststofflage eine Schutzschicht bildet. Der Unterteil kann aus Kunststoff bestehen, kann jedoch auch aus anderem Werkstoff sein. Auf das Unterteil wird im Schutz des Messerschildes ein Oberteil aufgesetzt. Vorzugsweise ist das Oberteil mehrteilig. Das erleichtert Transport und Montage. Das Oberteil besteht wahlweise gleichfalls aus Kunststoff. Die Kunststoffteile werden nach ihrer Positionierung miteinander verschweißt.

Nach dem bergmännischen Abbau und Ausbau in der zwischen den Abdichtungslagen liegenden Drainschicht kann der o. b. Ausbau in der Drainschicht verbleiben. Dazu ist es vorteilhaft, den Ausbau an der Basis gleichfalls mit Eintrittsöffnungen für Leckwasser zu versehen. Der Bestand dieses Ausbaus ist für die weitere Leckwasserkontrolle von Vorteil, wenn sich nahe an dem Bereich der ersten Leckstelle weitere Leckstellen zeigen. Dann kann von diesem Ausbau aus ein weiterer Ausbau zu der neuen Leckstelle vorgetrieben werden.

Es liegt im Rahmen der vorliegenden Erfindung, in der Deponieabdichtung anstelle einer der beiden Kunststofflagen eine andere Dichtlage, ggf. auch eine mineralische zu verwenden. Das gilt insbesondere für die untere Lage.

In der Zeichnung ist ein Ausführungsbeispiel der Erfindung dargestellt.

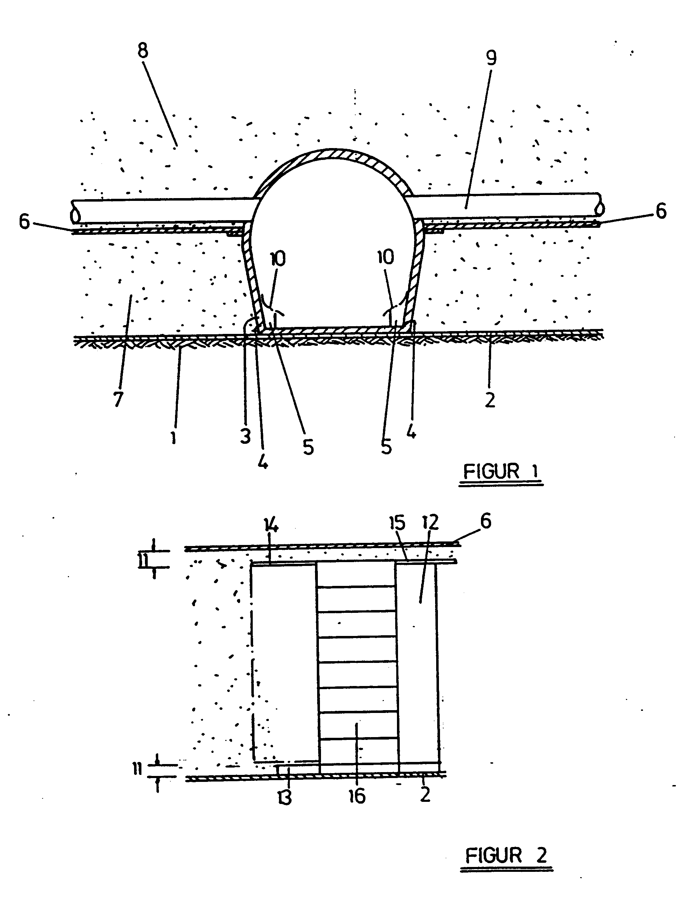

In Figur 1 ist mit 1 die Deponiesohle bezeichnet. Die Deponiesohle ist u.a. durch ein Feinplanum so vorbereitet, daß auf der Deponiesohle 1 eine Kunststoffabdichtung 2 liegen kann. Die Kunststoffabdichtung 2 besteht aus Hochdruckpolyäthylen. Sie kann jedoch auch aus anderen Kunststoffmaterialien bestehen, die gezielt darauf abgestellt sind, daß an die Kunststoffabdichtung 2 nur relativ geringe Anforderungen gestellt werden. Die Kunststoffabddichtung 2 hat lediglich die Aufgabe einer Leckwasseranzeige. D.h. sie soll auftretendes Leckwasser zu einem Sammlerrohr 3 führen, in dem das Leckwasser durch regelmäßige Begehung erkennbar wird und eine noch zu erläuternde Abdichtungsmaßnahme auslöst. Danach fällt das Leckwasser solange nicht mehr an, wie kein weiteres Leck auftritt.

Die Kunststoffabdichtung 2 besteht aus einer Vielzahl von Bahnen oder Planen, die so verlegt werden, daß sie an den Rändern aneinander überlappen und dort verschweißt werden können.

Das Sammlerrohr 3 steht auf der Kunststoffabdichtung 2 und besitzt am Fuß der Seitenwangen bei 4 nicht weiter dargestellte Eintrittsöffnungen, durch die Leckwasser eintreten kann. Das eintretende Leckwasser wird in Rinnen 5 gesammelt. Dort wird das eintretende Leckwasser bei Begehung des Rohres 3 erkennbar. Die Rinnen haben auch die Aufgabe, das Leckwasser einem nicht dargestellten Sammler zuzuführen, der als Schrägschacht außerhalb der Deponie verlegt ist.

In einem Abstand von 1,5 m ist oberhalb der Abdichtung 2 eine weitere Kunststoffabdichtung 6 vorgesehen. Die Kunststoffabdichtung 6 besteht aus Hochdruckpolyäthylen. Die Kunststoffabdichtung 6 ist in gleicher Weise verlegt wie die Kunststoffabdichtung 2. Jedoch wird die Kunststoffabdichtung 6 vom begehbaren Sammlerrohr 3 durchstoßen.

Zwischen den Abdichtungen 2 und 6 ist eine Drainageschicht 7 vorgesehen. Es handelt sich um mineralisches Material, z.B. Sand.

Oberhalb der Abdichtung 6 ist eine nicht dargestellte Schutzschicht vorgesehen. Die Schutzschicht kann aus einem Kunststoffvlies oder Glasvlies bestehen. Auf dem Vlies ist vorzugsweise noch eine mineralische Schutzschicht vorgesehen; darüber eine Drainschicht 8. Im Unterschied zur Drainschicht 7 besteht die Drainschicht 8 aus relativ grobem Kies. In die Drainschicht 8 sind Drainrohre 9 eingebettet. Die Drainrohre 9 führen in das Sammlerrohr 3. Das von den Drainrohren aufgenommene Sickerwasser der Deponie wird infolgedessen in die Sammlerrohre 3 geleitet. Dort strömt es an den Seitenwangen abwärts. Angeschweißte flexible Folienstreifen 10 verhindern, daß das Sickerwasser in die Rinnen 5 eintritt und sich dort mit dem Leckwasser vermengt.

Im Ausführungsbeispiel bestehen die Rohre 3 aus Kunststoff. Aus Wirtschaftlichkeitsgründen ist eine relativ dünne Schale für die Rohre gewählt. Die Rohre sind mit nicht dargestellten Aussteifungen versehen.

An der Durchtrittsstelle der Rohre 3 durch die Kunststoffabdichtung 6 sind an den Rohren 3 Stege vorgesehen, an denen die Kunststoffabdichtung 6 verschweißt ist. Das kann unmittelbar oder mittelbar über zusätzliche Materialstreifen erfolgen, die einer Extrusionsverschweißung förderlich sind.

In Figur 2 ist das Vorgehen im Falle des Feststellens von Leckwasser schematisch dargestellt.

Wenn bei einer Begehung des Sammlerrohres 3 in den Rinnen 5 Leckwasser festgestellt wird, wird an der Eintrittsstelle in die Rohrwandung eine Öffnung zwischen den Abdichtungen 2 und 6 geschnitten. In diese Öffnung wird, ausgehend von einer nicht dargestellten Lafette ein Messerschild eingefahren. Der Messerschild dient einem bergmännischen Vortrieb zwischen den Abdichtungen 2 und 6. Dabei werden die Messer in einem in Figur 2 mit 11 bezeichneten Sicherheitsabstand von den Kunststoffabdichtungen 2 und 6 vorwärts getrieben. Der Vortrieb erfolgt in bekannter Weise, indem aus einem geeigneten Gehäuse mittels hydraulischer Kraftkolben Messer in die Drainschicht 7 vorgetrieben werden. Die Messer bzw. der Messerschild stützt sich dabei an einem mit 12 bezeichneten Ausbau ab, der im Ausführungsbeispiel aus Beton erstellt wird und mehrteilig zusammengefügt wird. Der Ausbau 12 besitzt eine separat gesetzte Fußplatte 13. Die Fußplatte 13 wird verlegt, sobald im Schutz der vorgetriebenen Messer 14 ein ausreichender Hohlraum entsteht. Erst nach Verlegen der Bodenplatten 13 wird der Messerschild vorgerückt, auf die Bodenplatte 13. Das geschieht so weit, daß die Oberteile des Ausbaus 12 gesetzt werden können, im Schutz nachgezogener Kappen 15 des Messerschildes.

Durch unterschiedliche Steuerung der seitlichen Messer kann der mit 16 bezeichnete Messerschild auch in einem Radius bewegt werden. Für eine Messerschildbewegung auf einer gekrümmten Bahn sind wahlweise spezielle Ausbauteile vorgesehen, die segmentartig ausgebildet sind.

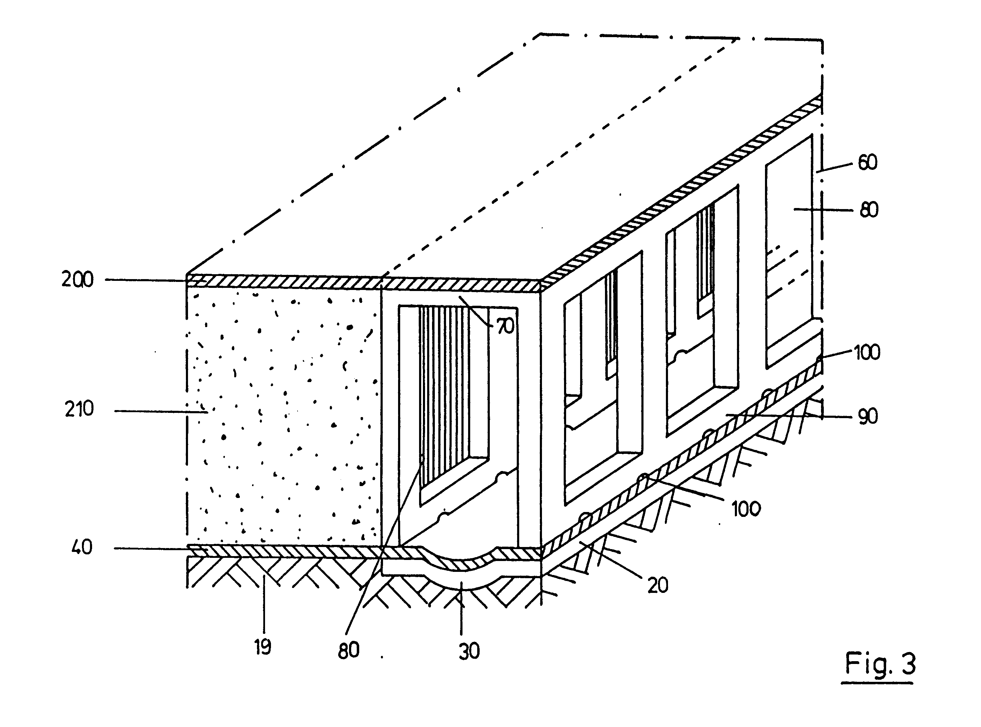

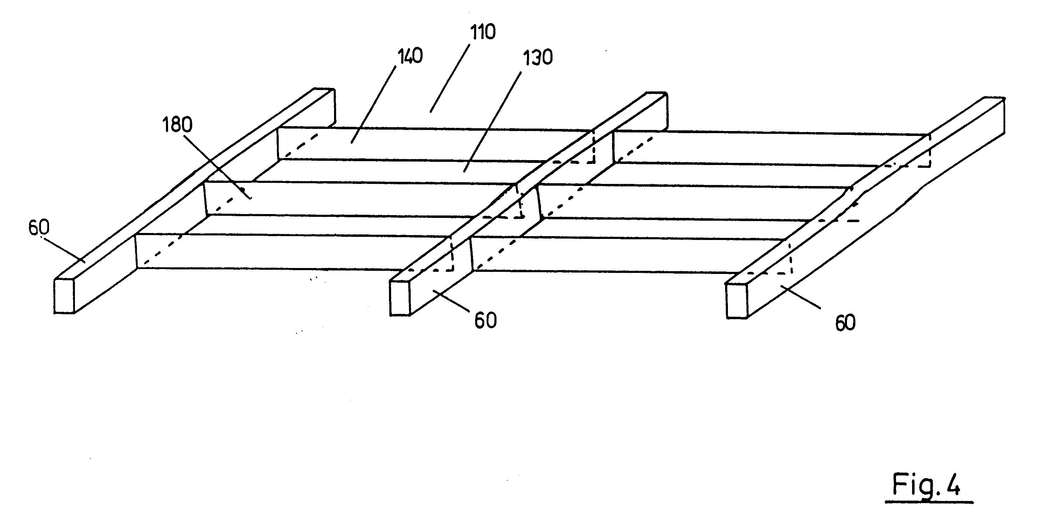

In Figur 3 bis 6 ist die Deponiesohle mit 19 bezeichnet. Die Deponiesohle 19 ist mit Glättschicht und anderen Merkmalen in gleicher Weise vorbereitet wie bei herkömmlichen Deponieabdichtungen mit ein oder mehrlagigen Kunststoffabdichtungen.

In die Deponiesohle 19 sind in gleichmäßigen Abständen Fundamentplatten 20 eingelegt. Die Fundamentplatten 20 bestehen aus Beton, haben eine langgestreckte Form und besitzen mittig eine Auswölbung, die eine Rinne 30 bildet.

Auf die Deponiesohle 19 und über die Fundamentplatten 20 ist eine Kunststoffabdichtung 40 aus Hochdruckpolyäthylen oder einem äthylencopolymerhaltigen Bitumengemisch verlegt worden. Die Kunststoffabdichtung 40 hat eine Dicke von 2,5 mm und setzt sich aus einzelnen Planen 50 zusammen. Die Planen besitzen im Ausführungsbeispiel eine Breite von 9 m und 50 m Länge. Die Abmessungen können schwanken. Es kommen Längen bis 100 m und mehr in Betracht, desgleichen 12 m Breite und mehr. Die Abmessungen sind lediglich durch die Herstellung und die Handhabung beim Transport und Verlegen begrenzt.

Die auf Rolle angelieferten Planen 50 werden auf der Deponiesohle abgerollt. Dazu eignet sich ein Traktor oder ein Unimog, der die Rollen bewegt. Dabei sind Rollenkerne von Vorteil, die sich in der Rolle drehen bzw. sind Zuggeschirre von Vorteil, die sich auf den Rollenkernen drehen. Die Planen 50 werden so verlegt, daß sie einander an den Rändern überlappen und im Überlappungsbereich verschweißt werden können. Für den Schweißvorgang eignen sich Schweißgeräte, die die Schweißflächen mit Heißluft und/oder elektrisch über Heizkeile plastifizieren und dann mit ihrem Gewicht den notwendigen Schweißdruck aufbringen.

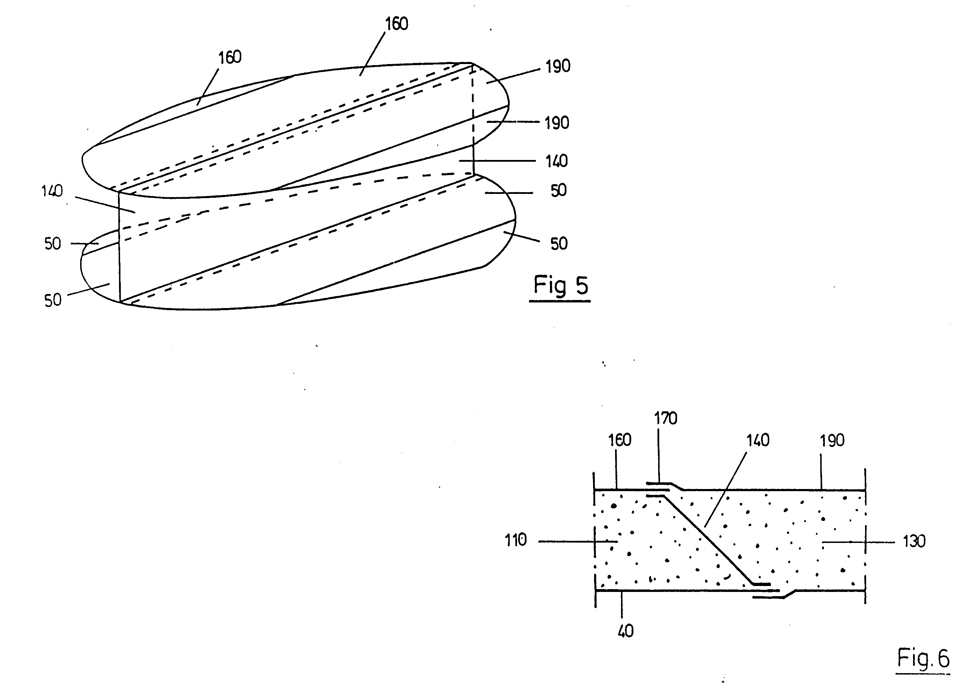

Die einzelnen Planen 50 sind in Figur 5 in einem Ausschnitt dargestellt.

Auf die mit der Kunststoffabdichtung 40 vorbereitete Deponiesohle werden n-förmige Kanäle 60 aufgestellt. Die Kanäle 60 bestehen - sofern sie nicht zusetzenden Gasen ausgesetzt sind - aus einer Betongitterkonstruktion mit geschlossener Decke 70, einander in beiden Seitenwänden gegenüberliegenden Fenstern 80 und einem Fuß 90. In den Fuß 90 sind Drainöffnungen 100 eingeformt. Die Drainöffnungen 100 haben halbkreisförmigen Querschnitt und dienen dem Durchtritt von Leckflüssigkeit. Die durch die Drainöffnungen 100 und/oder durch die Fenster 80 eintretende Leckflüssigkeit ist entweder Deponiesickerwasser oder Grundwasser. Sie sammelt sich in der Rinne 30 die durch die söhlige Kunststoffabdichtung 40 ausgekleidet ist.

Oben wird der Raum 130 mit einer Plane 190 abgedeckt. Die Plane 190 wird bei 170 mit der früher verlegten Plane 160 verschweißt. Ferner wird die Plane 190 in gleicher Weise mit der Zwischenbahn 180 verschweißt wie die Zwischenbahn 140 mit der Plane 160. Der o. b. Anschüttungs- und Einkapselungsvorgang setzt sich für alle Zwischenräume (z.B. 110) zwischen den Kanälen 60 fort.

Im Ausführungsbeispiel ist kein dichtender Anschluß der Zwischenbahnen 140, 180 mit den Kanälen 60 vorgesehen.

Die verschiedenen Planen 160 und 190 bilden zusammen eine obere Kunststoffabdichtung 200, die zusätzlich mit einer mineralischen Schutzschicht überdeckt wird. Die mineralische Schutzschicht soll eine mechanische Beschädigung der Kunststoffabdichtung 200 bei der Aufschüttung von Müll verhindern. Die so vorbereitete Abdichtung nimmt beim Deponiebetrieb den aufgehaldeten Müll auf.

Sobald sich in der oberen Kunststoffabdichtung 200 oder in der söhligen Kunststoffabdichtung 40 ein Leck bildet, dringt Sickerwasser aus der Deponie und/oder Grundwasser in die Kies- bzw. Sandschüttung. Von dort strömt die Leckflüssigkeit aufgrund einer entsprechenden Neigung der Deponiesohle zu einem der Kanäle 60 wo es sich in der Rinne 30 sammelt. Bei einer Begehung der Kanäle 60 läßt sich leicht erkennen, an welcher Stelle Leckflüssigkeit austritt. Dort wird der Leckströmung folgend ein Stollen in die in Figur 3 mit 210 bezeichnete Schüttung vorgetrieben. Der Stollenvortrieb erfolgt im Ausführungsbeispiel in der Weise, daß mit einer Lanze ein Verfestigungsmittel, z.B. Isocyanid in die Kies- oder Sandschüttung 210 gespritzt wird. Das kann durch gezieltes Einpressen der Lanze so gesteuert werden, daß selbsttragende Gewölbebildungen in der Kiesschüttung entstehen und das von dem entstehenden Gewölbe umschlossene lose Kies- bzw. Sandmaterial leicht hereingewonnen werden kann. Wahlweise wird der entstehende Hohlraum auch durch einen Stahl- oder Kunststoffausbau gesichert.

Der Stollenvortrieb erfolgt bis zum Beginn der Leckströmung. Dort befindet sich die Leckstelle. Befindet sich die Leckstelle in der oberen Kunststoffabdichtung 200, so wird durch die Leckstelle hindurch Verfestigungsmittel in die darüberliegende Mineralschicht gepreßt. Dadurch entsteht dort eine tragende Gewölbekonstruktion. Danach kann an der Leckstelle die obere Kunststoffabdichtung 200 freigelegt werden und ein die Leckstelle verschließender Flicken aufgeschweißt werden.

Bei einer Leckstelle in der söhligen Kunststoffabdichtung 40 entfällt die Injektion durch die Leckstelle.

Die Figur 5 zeigt in perspektivischer Darstellung den gleichen Ausschnitt, den Figur 6 zeigt. Aus Darstellungsgründen ist die Zwischenbahn 140 senkrecht eingezeichnet worden. In Wirklichkeit ist die Zwischenbahn 140 - wie o. b. - geneigt angeordnet.

Die Fenster 80 haben im Ausführungsbeispiel eine Reckteckform. Sie können auch runde oder andere Formen haben. Die Fensterform wird zweckmäßigerweise dem Querschnitt des geplanten Tunnelvortriebs angepaßt.

**Patentansprüche**

1.   Deponieabdichtung, bestehend aus mehreren Abdichtungslagen mit mindestens einer Kunststofflage (2, 6; 40, 200) und zwischenliegender Drainschicht (7; 210) aus Sand oder dergleichen, wobei die Drainschicht in Kanäle bzw. Rohre (3; 60) mündet, die begehbar sind, dadurch gekennzeichnet, daß die Drainschicht für einen bergmännischen Reparaturabbau eine Dicke von mindestens 80 cm aufweist und die Kanäle bzw. Rohre begehbare seitliche Austrittsöffnungen (80) aufweisen und/oder für den Reparaturabbau zu öffnen sind.

2. Deponieabdichtung nach Anspruch 1, dadurch gekennzeichnet daß die Sammlerrohre (3) mit einer oberhalb der oberen Abdichtungslage vorgesehenen Sickerwasserdrainage über eine Sickerwasserführung (9) verbunden sind.

3. Deponieabdichtung nach Anspruch 1 oder 2, gekennzeichnet durch außerhalb des Deponiekörpers geführte Sammlerschächte und/oder Revisionsschächte.

4. Deponieabdichtung nach Anspruch 3, gekennzeichnet durch eine separate Führung des Sickerwassers und Leckwassers in den Sammlerrohren (3).

5. Deponieabdichtung nach Anspruch 4, gekennzeichnet durch seitliche Rinnen (5) für das Leckwasser und mittlere Rinnen in den Sammlerrohren (3).

6. Deponieabdichtung nach Anspruch 5, gekennzeichnet durch Folienstreifen (10) als Überdeckung der Rinnen (5).

7. Deponieabdichtung nach einem oder mehreren der Ansprüche 1 bis 6, gekennzeichnet durch Kunststoffrohre (3), die nach Feststellen einer Leckwasserströmung im Bereich des Leckwassereintritts für einen bergmännischen Vortrieb zur Leckstelle aufgeschnitten werden.

8. Deponieabdichtung nach Anspruch 7, gekennzeichnet durch einen Messerschildvortrieb.

9. Deponieabdichtung nach Anspruch 7 oder 8, gekennzeichnet durch bleibenden Ausbau (12) bei dem bergmännischen Vortrieb.

10. Deponieabdichtung nach Anspruch 9, gekennzeichnet durch einen mehrteiligen Ausbau (12).

11. Deponieabdichtung nach Anspruch 9 oder 10, gekennzeichnet durch vorab gesetzte Fußplatten (13) des Ausbaus, die eine Unterlage für den Messerschild (16) bilden.

12. Deponieabdichtung nach einem oder mehreren der Ansprüche 8 bis 11, dadurch gekennzeichnet, daß die Messer (14) des Messerschildes (16) im Sicherheitsabstand (11) von der Abdichtung (2, 6) vorgetrieben werden.

13. Deponieabdichtung nach einem oder mehreren der Ansprüche 1 bis 12, dadurch gekennzeichnet, daß die söhlige Kunststoffdichtung (40) sich durchgehend unter den und/oder durch die Kanäle (60) bzw. Sammlerrohre erstreckt.

14. Deponieabdichtung nach Anspruch 13, gekennzeichnet durch Fundamentplatten (20) unter den Kanälen bzw. Sammlerrohren.

15. Deponieabdichtung nach Anspruch 14, dadurch gekennzeichnet, daß die Fundamentplatten (20) Rinnen (30) bilden.

16. Deponieabdichtung nach einem oder mehreren der Ansprüche 13 bis 15, dadurch gekennzeichnet, daß die obere Kunststoffabdichtung (200) sich durchgehend über den Kanälen (60) bzw. Sammlerrohren erstreckt.

17. Deponieabdichtung nach einem oder mehreren der Ansprüche 13 bis 16, gekennzeichnet durch schottbildende Zwischenbahnen (140, 180).

18. Deponieabdichtung nach Anspruch 17, dadurch gekennzeichnet, daß die oberen Nahtstellen der Zwischenbahnen (140, 180) im Bereich von Nahtstellen der oberen Abdichtung (200) liegen.

19. Deponieabdichtung nach einem oder mehreren der Ansprüche 13 bis 18, gekennzeichnet durch n-förmige Kanäle (60).

20. Deponieabdichtung nach einem oder mehreren der Ansprüche 13 bis 19, dadurch gekennzeichnet, daß die Kanäle (60) am Fuß (90) mit Drainöffnungen (100) versehen sind.

**Claims**

1. Waste dump isolation, consisting of several isolating layers comprising at least one plastics layer (2, 6; 40, 200) and intermediate drainage layer (7; 210) of sand or the like, the drainage layer leading into ducts or pipes (3; 60), which are suitable for man access, characterized in that the drainage layer has, for the purpose of repair excavation by mining techniques, a depth of at least 80 cm and the ducts or pipes have man-accessible, lateral outlet openings (80) and/or can be opened out for the repair excavation.

2. Waste dump isolation according to Claim 1, characterized in that the collector pipes (3) are connected by a percolating water guide (9) with a percolating water drainage system provided above the upper isolating layer.

3. Waste dump isolation according to Claims 1 or 2, characterized by collector shafts and/or inspection shafts located outside the dump body.

4. Waste dump isolation according to Claim 3, characterized by a separate guidance for the percolating water and for the leakage water in the collector pipes (3).

5. Waste dump isolation according to Claim 4, characterized by lateral gutters (5) for the leakage water and central gutters in the collector pipes (3).

6. Waste dump isolation according to Claim 5, characterized by sheet strips (10) as covers for the gutters (5).

7. Waste dump isolation according to one or more of Claims 1 to 6, characterized by plastics pipes (3) which, after a leakage cater flop has been detected, are cut open in the region of the leakage water inlet for mining excavation to the leakage position.

8. Waste dump isolation according to Claim 7, characterized by driving by means of a cutting shield.

9. Waste dump isolation according to Claims 7 or 8, characterized by tunnel lining (12) which is left in position in the excavation.

10. Waste dump isolation according to Claim 9, characterized by a multi-component liner (12).

11. Waste dump isolation according to Claim 9 or 10, characterized by previously laid base plates (13) for the liner, which form a base for the cutting shield (16).

12. Waste dump isolation according to one or more of Claims 8 to 11, characterized in that the cutters (14) of the cutting shield (16) are driven at a safety distance (11) from the isolating sheets (2, 6).

13. Waste dump isolation according to one or more of Claims 1 to 12, characterized in that the lower plastics isolating sheet (40) extends continuously underneath and/or through the ducts (60) and collector pipes.

14. Waste dump isolation according to Claim 13, characterized by foundation plates (20) underneath the ducts or collector pipes.

15. Waste dump isolation according to Claim 14, characterized in that the foundation plates (20) form gutters (30).

16. Waste dump isolation according to one or more of Claims 13 to 15, characterized in that the upper plastics isolating sheet (200) extends continuously over the ducts (60) and collector pipes.

17. Waste dump isolation according to one or more of Claims 13 to 16, characterized by partitioning intermediate sheets (140, 180).

18. Waste dump isolation according to Claim 17, characterized in that the upper seam positions of the intermediate sheets (140, 180) lie in the region of seam positions of the upper isolating sheet (200).

19. Waste dump isolation according to one or more of Claims 13 to 18, characterized by n-section ducts (60).

20. Waste dump isolation according to one or more of Claims 13 to 19, characterized in that the ducts (60) are provided at the foot (90) with drainage openings (100).

**Revendications**

1. Système d'étanchéité de décharge composé de plusieurs couches d'étanchéité comportant au moins une couche d'étanchéité en matière plastique (2, 6; 40, 200) et une couche intermédiaire de drainage (7; 210) en sable ou analogue, la couche de drainage débouchant dans des canaux ou des canalisations (3; 60) qui sont accessibles à l'homme, caractérisé en ce que la couche de drainage présente une épaisseur d'au moins 80 cm en vue de permettre une réparation par abattage du type minier, et en ce que les canaux ou canalisations comportent des ouvertures de sortie latérales (80) et/ou peuvent être ouverts pour une réparation par abattage.

2. Système d'étanchéité de décharge selon la revendication 1, caractérisé en ce que les canalisations de collecte (3) sont reliées entre elles au moyen d'un guidage d'eaux d'infiltration (9) formant un système de drainage d'eaux d'infiltration prévu au-dessus de la couche d'étanchéité supérieure.

3. Système d'étanchéité de décharge selon la revendication 1 ou 2, caractérisé par des puits de collecte et/ou de révision ayant été déplacés en-dehors du corps de la décharge.

4. Système d'étanchéité de décharge selon la revendication 3, caractérisé par un guidage séparé des eaux d'infiltration et des eaux de fuite dans les canalisations de collecte (3).

5. Système d'étanchéité de décharge selon la revendication 4, caractérisé par des rigoles latérales (5) pour les eaux de fuite et par des rigoles centrales dans les canalisations de collecte (3)

6. Système d'étanchéité de décharge selon la revendication 5, caractérisé par des bandes en feuille (10) formant recouvrement des rigoles (5).

7. Système d'étanchéité de décharge selon l'une ou plusieurs des revendications 1 à 6, caractérisé par des canalisations en matière plastique (3), qui après détection d'un écoulement de fuite, peuvent être découpées dans la zone de l'entrée des eaux de fuite, en vue d'un creusement du type minier jusqu'au point de fuite.

8. Système d'étanchéité de décharge selon la revendication 7, caractérisé par un creusement au bouclier d'avancement à couteaux.

9. Système d'étanchéité de décharge selon la revendication 7 ou 8, caractérisé par la pose, lors du creusement du type minier, d'un soutènement (12) restant en place.

10. Système d'étanchéité de décharge selon la revendication 9, caractérisé par un soutènement (12) en plusieurs parties.

11. Système d'étanchéité de décharge selon la revendication 9 ou 10, caractérisé par la pose préliminaire de semelles (13) du soutènement qui constituent une base pour le bouclier d'avancement à couteaux (16).

12. Système d'étanchéité de décharge selon l'une ou plusieurs des revendications 8 à 11, caractérisé en ce que les couteaux (14) du bouclier d'avancement à couteaux (16) creusent à une distance de sécurité (11) des éléments d'étanchéité (2, 6).

13. Système d'étanchéité de décharge selon l'une ou plusieurs des revendications 1 à 12, caractérisé en ce que l'élément d'étanchéité en matière plastique (40) situé côté sol, s'étend en continu respectivement sous et/ou au travers des canaux (60) et des canalisations de collecte.

14. Système d'étanchéité de décharge selon la revendication 13, caractérisé par des plaques de fondation (20) en-dessous des canaux ou canalisations de collecte.

15. Système d'étanchéité de décharge selon la revendication 14, caractérisé en ce que les plaques de fondation (20) forment des rigoles (30).

16. Système d'étanchéité de décharge selon l'une ou plusieurs des revendications 13 à 15, caractérisé en ce que l'élément d'étanchéité supérieur (200) en matière plastique s'étend en continu au-dessus des canaux (60) ou des canalisations de collecte.

17. Système d'étanchéité de décharge selon l'une ou plusieurs des revendications 13 à 16, caractérisé par des nappes intermédiaires (140, 180) formant des cloisons.

18. Système d'étanchéité de décharge selon la revendication 17, caractérisé en ce que les zones de jointure supérieures des nappes intermédiaires (140, 180) se situent dans la région de zones de jointure de l'élément d'étanchéité supérieur (200).

19. Système d'étanchéité de décharge selon l'une ou plusieurs des revendications 13 à 18, caractérisé par des canaux (60) en forme de "n".

20. Système d'étanchéité de décharge selon l'une ou plusieurs des revendications 13 à 19, caractérisé en ce que les canaux (60) sont pourvus à la base (90) d'orifices de drainage (100).

EP 0 329 825 B1

FIGUR 1

FIGUR 2

10

Fig. 3

EP 0 329 825 B1

EP 0 329 825 B1

Fig.4

12

160

160

190

190

140

50

140

50

50

50

Fig 5

EP 0 329 825 B1

170

160

140

190

110

130

40

Fig. 6